# FASCICULE DE BREVET EUROPEEN

(11) **EP 3 252 559 B1**
(45) Date de publication et mention de la délivrance du brevet: **04.12.2019**
(21) Numéro de dépôt: 17174364.4
(22) Date de dépôt: 02.06.2017
(51) Int. Cl.: G05D 1/08, B64G 1/28, B64G 1/36

(54) **PROCÉDÉ DE CONTRÔLE D'ATTITUDE D'UN ENGIN SPATIAL, PRODUIT PROGRAMME D'ORDINATEUR ET MODULE DE CONTRÔLE ASSOCIÉS**
VERFAHREN ZUR KONTROLLE DER FLUGLAGE EINES RAUMFLUGKÖRPERS, ENTSPRECHENDES COMPUTERPROGRAMMPRODUKT UND KONTROLLMODUL
METHOD OF ATTITUDE CONTROL OF A SPACE ENGINE, ASSOCIATED COMPUTER PROGRAM PRODUCT AND CONTROL MODULE

(30) Priorité: 03.06.2016 FR 1600899
(43) Date de publication de la demande: 06.12.2017
(73) Titulaire: THALES, 92400 Courbevoie (FR)
(72) Inventeur: ARNAUDON, Alexandre, Harwell, Oxford OX11 0QX (GB); LE PRIELLEC, Alan, Harwell, Oxford OX11 0QX (GB); PIERRE, Estelle, 06150 Cannes (FR); BROUILLARD, Etienne, 06150 Cannes (FR)
(74) Mandataire: Lavoix

(56) Documents cités:
- EP-A1- 0 519 038
- EP-A2- 0 435 708
- FR-A1- 2 531 547
- FR-A1- 2 970 701
- US-A- 5 433 402
- US-A1- 2005 113 986
- N/a N/a: "Contrôle d'attitude - Wikipédia", , 7 April 2016 (2016-04-07), XP055496027, Retrieved from the Internet: URL:https://fr.wikipedia.org/w/index.php?t itle=Contr%C3%B4le_d%27attitude&oldid=1251 01244 [retrieved on 2018-07-30]

## Description

La présente invention porte sur le domaine des Systèmes de Commande d'Attitude et d'Orbite (SCAO) pour un engin spatial. Plus particulièrement, la présente invention concerne un procédé de contrôle d'attitude d'un tel engin spatial.

La présente invention concerne également un produit programme d'ordinateur et un module de contrôle associés à un tel procédé.

Le procédé de contrôle selon l'invention est notamment utilisable pour piloter un satellite en orbite autour d'un corps céleste. En particulier, le procédé de contrôle selon l'invention est applicable pour piloter un satellite en orbite géostationnaire.

De manière connue en soi, un satellite comporte une pluralité d'actionneurs et de capteurs permettant notamment de corriger son attitude. Pour ce faire, les actionneurs sont aptes à contrôler la dynamique du satellite et à gérer son moment cinétique en le faisant ainsi tourner autour de son centre de masse. Le fonctionnement de ces actionneurs est commandé à partir d'une commande de pilotage générée par un module de contrôle correspondant.

Des corrections de l'attitude sont généralement nécessaires pour assurer un bon déroulement de la mission de ce satellite ou encore pour assurer la mise en sécurité du satellite.

Dans ce contexte, on connait par exemple le document US 5 433 402 A décrivant une méthode de correction de l'attitude d'un satellite. Le document FR 2 531 547 A1 fait également partie de l'état antérieur de la technique.

Selon d'autres exemples connus, dans le cas d'un satellite géostationnaire, des corrections de l'attitude du satellite ont pour but d'orienter son axe de pointage de sorte que son équipement de communication avec la Terre tel qu'une antenne, pointe à un endroit souhaité sur la surface terrestre.

Selon un autre exemple, dans le cas d'un événement imprévu sur le satellite, des corrections de l'attitude du satellite ont pour but d'orienter son axe de pointage de sorte que ses générateurs solaires soient orientés vers le Soleil et son équilibre thermique soit assuré.

Ainsi, par exemple, lors de la séparation du satellite et du lanceur, le satellite présente une attitude et un moment cinétique non maitrisés.

Cela est également le cas lorsque le satellite bascule d'un mode normal dans un mode survie ayant pour but de garantir ses fonctions vitales (génération de puissance électrique et régulation thermique) suite à la défaillance d'un équipement ou à tout autre anomalie.

Dans les deux cas, une phase critique du contrôle d'attitude consiste à stabiliser l'attitude du satellite en réduisant son moment cinétique, et à l'orienter dans une direction recherchée, par exemple vers le Soleil.

Ainsi, de nombreuses exigences s'imposent aux actionneurs afin de garantir leur fiabilité notamment lors des phases critiques d'exploitation du satellite. On conçoit alors que ceci empêche le développement de nouvelles architectures de satellites et plus particulièrement, d'engins spatiaux.

La présente invention a pour but de proposer un procédé de contrôle d'attitude d'un engin spatial permettant de simplifier les exigences envers les actionneurs, et d'ouvrir ainsi la voie vers de nouvelles architectures de satellites, en particulier en réduisant le nombre d'actionneurs embarqués.

À cet effet, l'invention a pour objet un procédé de contrôle d'attitude d'un engin spatial conforme à la revendication 1.

Suivant d'autres aspects avantageux de l'invention, le procédé de contrôle comprend une ou plusieurs des caractéristiques des revendications 2 à 12.

L'invention a également pour objet un produit programme d'ordinateur comportant des instructions logicielles qui, lorsque mises en œuvre par un équipement informatique, mettent en œuvre un procédé tel que défini ci-dessus.

L'invention a également pour objet un module de contrôle d'attitude d'un engin spatial conforme à la revendication 13.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un engin spatial, l'engin spatial comportant notamment un module de contrôle d'attitude selon l'invention ; et
- la figure 2 est un organigramme d'un procédé de contrôle d'attitude selon l'invention, le procédé étant mis en œuvre par le module de la figure 1.

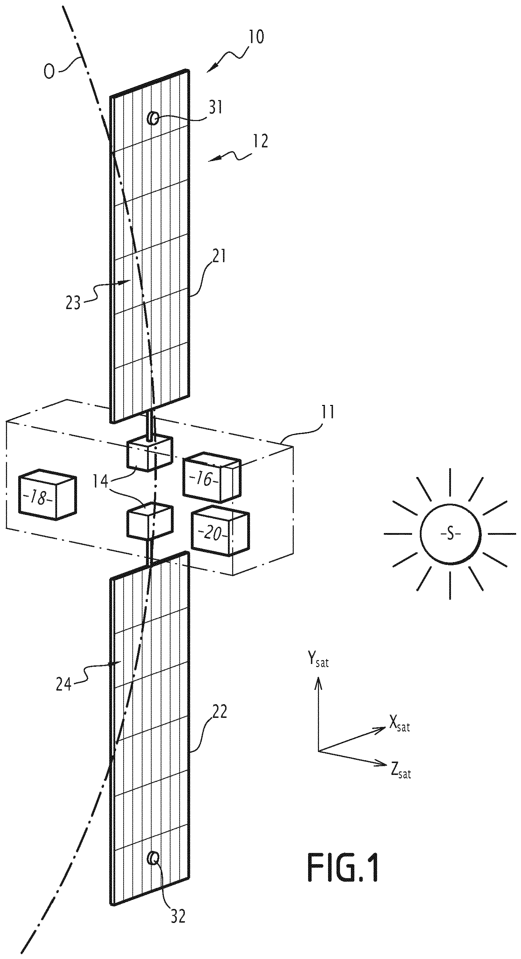

L'engin spatial 10 de la figure 1 est un satellite, de préférence un satellite géostationnaire.

Toutefois, il doit être compris que l'invention reste applicable pour contrôler l'attitude de tout autre satellite et plus globalement, de tout autre engin spatial.

Comme illustré sur cette figure, le satellite 10 est mis sur une orbite géostationnaire O autour d'une planète, telle que la Terre qui gravite alors autour du Soleil S.

Le satellite 10 comporte une cellule principale 11, un générateur solaire 12 permettant d'alimenter différents composants électriques du satellite 10, un module de motorisation 14 permettant de modifier l'orientation du générateur solaire 12, un module de mesure 16 d'au moins certains paramètres physiques relatifs au satellite 10, un module de contrôle d'attitude 18 selon l'invention et un système d'accumulation de moment cinétique 20 pilotable par le module de contrôle 18.

Le satellite 10 définit un repère local, dit encore repère satellite, qui est composé de trois axes orthogonaux, à savoir un axe de générateur Yₛₐₜ, un premier axe local Xₛₐₜ et un deuxième axe local Zₛₐₜ.

L'axe de générateur Yₛₐₜ est orienté suivant le générateur solaire 12. Le deuxième axe local Zₛₐₜ est l'axe satellite orienté vers le Soleil S après convergence du procédé de contrôle selon l'invention décrit par la suite et le premier axe Xₛₐₜ complète le repère satellite qui est un repère orthogonal droit.

Lors du mouvement du satellite 10 suivant l'orbite O, le satellite 10 tourne autour des axes locaux Xₛₐₜ, Yₛₐₜ, Zₛₐₜ avec respectivement des vitesses angulaires ω_{X}, ω_{Y} et ω_{Z}.

Le générateur solaire 12 comprend deux panneaux solaires 21, 22 disposés symétriquement par rapport au deuxième axe local Zₛₐₜ sensiblement selon l'axe de générateur Yₛₐₜ.

Ainsi, dans l'exemple décrit, chaque panneau solaire 21, 22 présente une surface orientable. Toutefois, il doit être compris que dans le cas général, le terme « surface orientable » se rapporte à toute surface dont l'orientation est modifiable par le module de motorisation 14.

Par ailleurs, un panneau solaire 21, 22 ou plus généralement une surface orientable, est disposé(e) sensiblement selon l'axe de générateur Yₛₐₜ lorsque ce panneau ou cette surface est disposé(e) selon un axe formant un angle d'écartement maximal inférieur à 15 degrés, de préférence inférieur à 5 degrés, avec l'axe de générateur Yₛₐₜ.

Chaque panneau solaire 21, 22 comprend une face plane d'éclairage 23, 24 destinée à être orientée face au Soleil S. La face d'éclairage 23, 24 comprend éventuellement une pluralité de cellules photovoltaïques aptes à produire de l'énergie électriques lorsqu'elles sont éclairées par le Soleil S selon des technologies connues en soi.

Sur la figure 1, la normale à la face d'éclairage 23, 24 de chacun des panneaux 21, 22 est orientée selon le deuxième axe local Zₛₐₜ.

Le module de motorisation 14 permet de modifier l'orientation de chaque face d'éclairage 23, 24 dans le repère satellite par rapport à la cellule principale 11 en faisant tourner le panneau solaire 21, 22 correspondant autour de l'axe de générateur Yₛₐₜ.

En particulier, le module de motorisation 14 comporte deux moteurs associés aux panneaux solaires 21, 22 et permettant de tourner chacun de ces panneaux 21, 22 de manière indépendante par rapport à la cellule principale 11.

Pour ce faire, le module de motorisation 14 est apte à recevoir des commandes de pilotage issues du module de contrôle d'attitude 18 et en fonction de ces commandes, à tourner les panneaux 21, 22 autour de l'axe de générateur Yₛₐₜ comme cela sera expliqué par la suite.

Ainsi, l'orientation de chaque panneaux solaire 21, 22 est déterminée par l'angle de la face d'éclairage correspondante 23, 24 autour de l'axe de générateur Yₛₐₜ par rapport à l'axe Zₛₐₜ par exemple.

Le module de mesure 16 comporte un ensemble de capteurs aptes à mesurer des vitesses de rotation, comme par exemple un gyroscope, disposé à proximité du centre de masse du satellite 10 et un ensemble de capteurs aptes à mesurer l'attitude du satellite, comme par exemple une pluralité de détecteurs solaires disposés sur les panneaux solaires 21, 22. Pour faciliter la lecture, seuls deux détecteurs solaires 31 et 32 sont illustrés sur la figure 1.

Le gyroscope permet d'estimer les vitesses angulaires ω_{X}, ω_{Y} et w_{Z} de rotation du satellite 10 autour respectivement des axes Xₛₐₜ, Yₛₐₜ, Zₛₐₜ.

Les détecteurs solaires 31, 32 permettent au module de mesure 16 d'estimer la direction du flux lumineux issu du Soleil S.

En particulier, chaque détecteur solaire 31, 32 est apte à mesurer la puissance reçue du flux lumineux solaire et le module de mesure 16 est apte à comparer les mesures produites par ces détecteurs 31, 32 pour estimer la direction de ce flux.

Le système d'accumulation de moment cinétique 20 comporte une pluralité d'actionneurs (non-illustrés) notamment aptes à contrôler l'attitude du satellite 10. Dans l'exemple décrit, chaque actionneur comprend une roue à réaction connue en soi.

Les roues à réaction permettent notamment d'accumuler un moment cinétique H_{RW} principalement orienté selon l'axe de générateur Yₛₐₜ.

Un moment cinétique est principalement orienté selon un axe, lorsque la valeur de la projection de ce moment cinétique sur cet axe, est supérieure à la valeur de la projection de ce moment cinétique sur chacun des autres axes.

De préférence, un moment cinétique est principalement orienté selon un axe, lorsque la valeur de la projection de ce moment cinétique sur cet axe, est supérieure à la somme des valeurs des projections de ce moment cinétique sur les autres axes.

Le module de contrôle d'attitude 18 permet de contrôler l'attitude du satellite 10 en pilotant le système d'accumulation de moment cinétique 20 et le module de motorisation 14.

Le module de contrôle d'attitude 18 se présente par exemple sous la forme d'un calculateur embarqué apte à mettre en œuvre une pluralité de logiciels de pilotage.

En particulier, le module de contrôle d'attitude 18 est apte à générer une pluralité de commandes de pilotage destinées aux actionneurs et/ou au module de motorisation 14 en fonction notamment des mesures fournies par le module de mesure 16.

Le module de contrôle d'attitude 18 est apte à piloter l'attitude du satellite 10 selon un mode normal et un mode survie.

Le mode survie est un mode de fonctionnement du satellite 10 qui a pour but de garantir ses fonctions vitales comme notamment la génération de puissance électrique ou la régulation thermique, suite à la défaillance d'un équipement ou à tout autre anomalie. Il diffère du mode normal dans lequel le satellite 10 est opéré de manière nominale afin d'assurer sa mission.

Dans le mode survie, le module de contrôle d'attitude 18 génère des commandes de pilotage destinées aux actionneurs opérationnels et au module de motorisation 16, selon le procédé 100 de contrôle d'attitude selon l'invention décrit par la suite.

Ce procédé est mis en œuvre au moins en partie par un logiciel de pilotage dédié au mode survie du satellite 10 après que par exemple le satellite 10 est basculé du mode normal dans le mode survie.

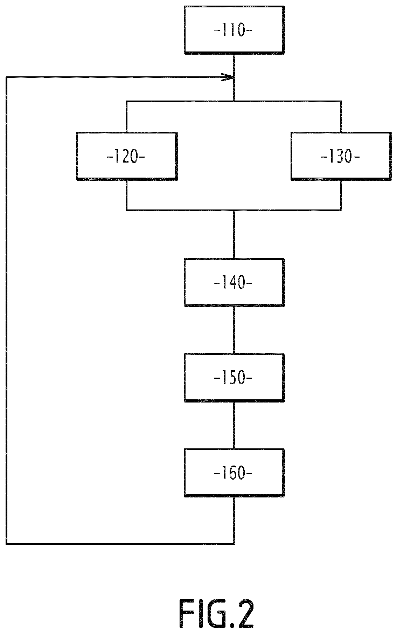

Le procédé 100 est décrit par la suite en référence à la figure 2 présentant un organigramme de ses étapes.

Lors de l'étape 110 initiale, le module de contrôle d'attitude 18 génère des commandes de pilotage destinées aux actionneurs du système d'accumulation de moment cinétique 20 et permettant de conserver le moment cinétique H_{RW} embarqué hérité du mode précédent. Le moment cinétique hérité est principalement orienté selon l'axe Yₛₐₜ.

Ainsi, lorsque chaque actionneur du système 20 comprend une roue à réaction, les commandes de pilotage générées par le module de contrôle d'attitude 18 et destinées à cet actionneur, ont pour but de maintenir une vitesse de rotation constante de la roue à réaction correspondante.

Le moment cinétique H_{RW} accumulé assure notamment une stabilité gyroscopique du satellite 10 autour des axes locaux Xₛₐₜ, Zₛₐₜ.

La stabilité gyroscopique permet notamment de :
- maintenir une attitude qui favorise l'ensoleillement des panneaux solaires 21, 22 ;
- maintenir une attitude stabilisée selon les axes Xₛₐₜ et Zₛₐₜ en l'absence de contrôle, comme par exemple en période d'éclipse du Soleil S par la Terre ;
- favoriser le transfert des vitesses angulaires du satellite entre ω_{X} et ω_{Z} pendant la phase de réduction du moment cinétique.

L'étape 110 est par exemple réalisée juste après le passage du module de contrôle d'attitude 18 dans le mode survie.

Les étapes suivantes du procédé sont répétées de manière continue pour chaque orientation courante des panneaux solaires 21, 22.

Lors de l'étape 120, le module de mesure 16 estime les vitesses angulaires ω_{X}, ω_{Y} et ω_{Z} en utilisant par exemple le gyroscope.

Lors de l'étape 130 mise en œuvre en parallèle avec l'étape 120, le module de mesure 16 estime la direction du flux lumineux par rapport à l'orientation courante des panneaux solaires 21, 22 en utilisant notamment les détecteurs solaires 31, 32.

Lors de l'étape 140 suivante, le module de contrôle d'attitude 18 détermine une attitude de consigne correspondant à l'attitude du satellite à atteindre par une ou plusieurs manœuvres de pilotage.

En particulier, l'attitude de consigne correspond à une attitude du satellite 10 selon laquelle il est dans une position d'équilibre. Dans une telle position, le moment cinétique total du satellite 10 est idéalement confondu avec l'axe de générateur Yₛₐₜ, lui-même perpendiculaire au flux lumineux issu du Soleil S.

Selon une autre variante de réalisation, l'attitude de consigne correspond à toute autre orientation du satellite 10 déterminée par exemple par sa mission.

Lors de l'étape 150 suivante, le module de contrôle d'attitude 18 détermine une orientation suivante des panneaux solaires 21, 22 dans laquelle le couple solaire engendré par l'interaction du flux lumineux avec les faces d'éclairage 23, 24, permet d'atteindre l'attitude de consigne.

Cette orientation suivante est déterminée en fonction de l'orientation courante des panneaux solaires 21, 22, de la direction du flux lumineux, des vitesses angulaires ω_{X}, ω_{Y} et ω_{Z} et du moment cinétique H_{RW} accumulé par les actionneurs du système 20.

Lors de l'étape 160, le module de contrôle d'attitude 18 génère une commande de pilotage destinée au module de motorisation 14 pour tourner les panneaux solaires 21, 22 autour de l'axe de générateur Yₛₐₜ afin d'atteindre l'orientation suivante de ces panneaux.

Ainsi, par exemple, lorsque les commandes de pilotage consistent à dépointer les deux panneaux solaires 21, 22 dans la même direction et avec la même amplitude, d'une part, un couple est créé autour de l'axe de générateur Yₛₐₜ grâce à l'écart existant entre l'axe Yₛₐₜ et le centre de masse du satellite 10. Le bras de levier ainsi formé permet de créer le couple nécessaire au contrôle de la vitesse de rotation ω_{Y}.

D'autre part, un couple est créé dans le plan formé par les axes locaux Xₛₐₜ et Zₛₐₜ en dépointant simultanément dans des directions opposées et avec la même amplitude les deux panneaux solaires 21, 22. Le couple créé est alors dans le plan bissecteur des panneaux solaires 21, 22. Ce couple permet de contrôler conjointement les vitesses de rotation ω_{X} et ω_{Z}.

Dans un autre exemple, les panneaux solaires 21, 22 sont dépointés de manière à générer des couples qui s'opposent à une composante parasite du moment cinétique H_{RW} accumulé dans le système d'accumulation du moment cinétique 20. De cette façon il est donc possible de diminuer cette composante parasite sans pour autant créer de vitesses induites sur le satellite 10.

Le procédé 100 peut comprendre une étape optionnelle consistant à contrôler le moment cinétique H_{RW} de sorte à garder le moment cinétique H_{RW} accumulé principalement orienté selon l'axe de générateur Yₛₐₜ.

Ce contrôle est notamment effectué via le contrôle du fonctionnement du système d'accumulation de moment cinétique 20 et a pour but d'améliorer des performances du procédé 100.

On conçoit alors que la présente invention présente un certain nombre d'avantages.

Ainsi, le procédé de contrôle selon l'invention propose d'utiliser les panneaux solaires ou toute autre surface orientable en tant qu'actionneurs électriques au moins dans le mode survie du satellite.

En effet, le flux lumineux présentant un flux de photons émis par le Soleil S qui interagit avec les panneaux solaires, permet d'engendrer un couple solaire appliqué au satellite.

Ce couple solaire dépend de l'orientation des panneaux solaires par rapport au satellite ainsi qu'à l'orientation du satellite par rapport au Soleil S.

Le procédé selon l'invention propose donc de contrôler le couple solaire pour contrôler l'attitude du satellite en s'appuyant sur la stabilité gyroscopique apportée par un moment cinétique principalement orienté selon l'axe Yₛₐₜ généré par des actionneurs.

D'autre part, une convergence vers une attitude pointée soleil est assurée par le décalage entre l'axe de générateur solaire Yₛₐₜ et le centre de masse du satellite. L'effet girouette ainsi créé vient aligner le centre des générateurs solaires, le centre de masse du satellite et le Soleil dans cet ordre. Le centre des générateurs solaires étant défini par le point équidistant entre les deux emplantures des générateurs solaires, sur l'axe de générateur Yₛₐₜ.

Le contrôle d'attitude du satellite selon le procédé n'implique pas l'usage d'un système propulsif, en particulier pour réduire le moment cinétique total du satellite. L'orbite initiale du satellite n'est donc pas perturbée ce qui présente un avantage particulier de l'invention.

En outre, le procédé selon l'invention est particulièrement adapté pour répondre à la nécessité de maitriser l'attitude d'un satellite lors du basculement du satellite dans un mode survie. Toutefois cette mise en œuvre n'est pas limitative, et le procédé peut s'appliquer selon le même principe et avec les mêmes avantages plus généralement à tout type d'engin spatial pour lequel on cherche à contrôler le moment cinétique et l'attitude et orienter les panneaux solaires au soleil à partir d'une situation initiale non maitrisée.

Finalement, le procéder selon l'invention permet de contrôler l'attitude de l'engin spatial sans faire appel à un système propulsif, et cela même en mode survie.

## Revendications

1. Procédé (100) de contrôle d'attitude d'un engin spatial (10), l'engin spatial (10) définissant un repère local composé de trois axes locaux (Xₛₐₜ, Yₛₐₜ, Zₛₐₜ) et comportant au moins une surface orientable (21, 22) s'étendant suivant l'un des axes locaux (Yₛₐₜ), dit axe de générateur, un module de motorisation (14) apte à recevoir des commandes de pilotage et à modifier l'orientation de la ou de chaque surface orientable (21, 22) dans le repère local (Xₛₐₜ, Yₛₐₜ, Zₛₐₜ) en fonction des commandes de pilotage reçues, un module de mesure (16) apte à mesurer au moins certains paramètres physiques relatifs à l'engin spatial (10), et un système d'accumulation de moment cinétique (20) ;
le procédé (100) comportant les étapes suivantes, mises en œuvre pour chaque orientation courante de la ou de chaque surface orientable (21, 22) :
- maintenir (110) le moment cinétique (H_{RW}) accumulé avant la mise en œuvre du procédé (100) par le système d'accumulation de moment cinétique (20) ;
- estimer (120) les vitesses angulaires (ω_{X}, ω_{Y}, ω_{Z}) de rotation de l'engin spatial (10) autour des trois axes locaux (Xₛₐt, Yₛₐₜ, Zₛₐₜ) du repère local ;
- estimer (130) la direction du flux lumineux issu du Soleil (S) par rapport à la ou à chaque surface orientable (21, 22) ;
- déterminer (140) une attitude de consigne ;
- déterminer (150) une orientation suivante de la ou de chaque surface orientable (21, 22) dans laquelle le couple solaire engendré par l'interaction du flux lumineux avec la ou les surfaces orientables (21, 22), permet d'atteindre l'attitude de consigne ;
- générer (160) une commande de pilotage destinée au module de motorisation (14) pour faire passer la ou chaque surface orientable (21, 22) dans l'orientation suivante ;
dans lequel chaque orientation suivante de la ou de chaque surface orientable (21, 22) est déterminée en fonction de l'orientation courante de la ou de chaque surface orientable (21, 22), de la direction du flux lumineux issu du Soleil (S), des vitesses angulaires (ω_{X}, ω_{Y}, w_{Z}) mesurées et du moment cinétique (H_{RW}) accumulé.

2. Procédé (100) selon la revendication 1, dans lequel l'attitude de consigne déterminée est telle que l'engin spatial (10) est dans une position d'équilibre dynamique relativement à l'ensemble des forces extérieures appliquées à l'engin spatial (10).

3. Procédé selon l'une quelconque des revendications précédentes, dans lequel chaque changement de l'orientation de la ou de chaque surface orientable (21, 22) correspond à une rotation de la ou de chaque surface orientable (21, 22) autour au moins de l'axe de générateur (Yₛₐₜ).

4. Procédé selon l'une quelconque des revendications précédentes, dans lequel l'engin spatial (10) comporte au moins deux surfaces orientables (21, 22) disposées sensiblement selon l'axe de générateur (Yₛₐₜ) de manière symétrique par rapport à un autre axe local (Zₛₐₜ).

5. Procédé selon l'une quelconque des revendications précédentes, dans lequel au moins une surface orientable (21, 22) est un panneau solaire (21, 22) comprenant une face d'éclairage (23, 24).

6. Procédé (100) selon la revendication 5, dans lequel l'attitude de consigne déterminée et la commande de pilotage sont telles que l'angle entre la normale à la face d'éclairage (23, 24) du ou de chaque panneau solaire (21, 22) et la direction du flux lumineux issu du Soleil (S) soit inférieur à 90 degrés.

7. Procédé (100) selon l'une quelconque des revendications précédentes, dans lequel le système d'accumulation de moment cinétique (20) comporte au moins une roue à réaction.

8. Procédé (100) selon la revendication 7, dans lequel l'étape de maintien (110) du moment cinétique (H_{RW}) correspond au maintien d'une vitesse de rotation constante de la ou de chaque roue à réaction.

9. Procédé (100) selon l'une quelconque des revendications précédentes, comportant en outre une étape consistant à contrôler le moment cinétique (H_{RW}) de sorte à garder le moment cinétique (H_{RW}) accumulé principalement orienté selon l'axe de générateur (Yₛₐₜ).

10. Procédé (100) selon l'une quelconque des revendications précédentes, dans lequel l'engin spatial (10) est un satellite ou une sonde interplanétaire.

11. Procédé (100) selon l'une quelconque des revendications précédentes, dans lequel la ou chaque surface orientable (21, 22) est disposée de sorte que l'axe de générateur (Yₛₐₜ) soit à l'écart du centre de masse de l'engin spatial (10).

12. Produit programme d'ordinateur comportant des instructions logicielles qui, lorsque mis en œuvre par un équipement informatique, met en œuvre le procédé (100) selon l'une quelconque des revendications précédentes.

13. Module de contrôle d'attitude (18) d'un engin spatial (10), l'engin spatial (10) définissant un repère local composé de trois axes locaux (Xₛₐₜ, Yₛₐₜ, Zₛₐₜ) et comportant au moins une surface orientable (21, 22) s'étendant suivant l'un des axes locaux (Yₛₐₜ), dit axe de générateur, un module de motorisation (14) apte à recevoir des commandes de pilotage et à modifier l'orientation de la ou de chaque surface orientable (21, 22) dans le repère local (Xₛₐₜ, Yₛₐₜ, Zₛₐₜ) en fonction des commandes de pilotage reçues, un module de mesure (16) apte à mesurer au moins certains paramètres physiques relatifs à l'engin spatial (10), et un système d'accumulation de moment cinétique (20) ;
le module contrôle d'attitude (18) étant apte à :
- maintenir le moment cinétique (H_{RW}) accumulé par le système d'accumulation de moment cinétique (20) ;
- estimer les vitesses angulaires (ω_{X}, ω_{Y}, ω_{Z}) de rotation de l'engin spatial (10) autour des trois axes locaux (Xₛₐₜ, Yₛₐₜ, Zₛₐₜ) du repère local ;
- estimer la direction du flux lumineux issu du Soleil (S) par rapport à la ou à chaque surface orientable (21, 22) ;
- déterminer une attitude de consigne ;
- déterminer une orientation suivante de la ou de chaque surface orientable (21, 22) dans laquelle le couple solaire engendré par l'interaction du flux lumineux avec la ou les surfaces orientables (21, 22), permet d'atteindre l'attitude de consigne ;
- générer une commande de pilotage destinée au module de motorisation (14) pour faire passer la ou chaque surface orientable (21, 22) dans l'orientation suivante ;
chaque orientation suivante de la ou de chaque surface orientable (21, 22) étant déterminée en fonction de l'orientation courante de la ou de chaque surface orientable (21, 22), de la direction du flux lumineux issu du Soleil (S), des vitesses angulaires (ω_{X}, ω_{Y}, wz) mesurées et du moment cinétique (H_{RW}) accumulé.

## Patentansprüche

1. Verfahren (100) zum Steuern der Fluglage eines Weltraumgeräts (10), wobei das Weltraumgerät (10) ein lokales Koordinatensystem definiert, welches aus drei lokalen Achsen (Xₛₐₜ, Yₛₐₜ, Zₛₐₜ) zusammengesetzt ist, und aufweist mindestens eine ausrichtbare Fläche (21, 22), welche sich entlang einer der lokalen Achsen (Yₛₐₜ), genannt Generatorachse, erstreckt, ein Motorisierungsmodul (14), welches imstande ist, um Steuerbefehle zu empfangen und um eine Ausrichtung von der oder von jeder ausrichtbaren Fläche (21, 22) in dem lokalen Koordinatensystem (Xₛₐₜ, Yₛₐₜ, Zₛₐₜ) abhängig von den empfangenen Steuerbefehlen zu modifizieren, ein Messmodul (16), welches imstande ist, um mindestens bestimmte physikalische Parameter zu messen, welche relativ zu dem Weltraumgerät (10) sind, und ein System zum Akkumulieren von Drehimpuls (20),
wobei das Verfahren (100) die folgenden Schritte aufweist, welche für jede aktuelle Ausrichtung von der oder von jeder ausrichtbaren Fläche (21, 22) durchgeführt werden:
- Beibehalten (110) des Drehimpulses (H_{RW}), der vor dem Durchführen des Verfahrens (100) mittels des Systems zum Akkumulieren von Drehimpuls (20) akkumuliert wird,
- Berechnen (120) der Winkelgeschwindigkeiten (*ω*_{X}, *ω_{Y} ω*_{Z}) der Drehung des Weltraumgeräts (10) um die drei lokalen Achsen (Xₛₐₜ, Yₛₐₜ, Zₛₐₜ) des lokalen Koordinatensystems,
- Berechnen (130) der Richtung des Lichtflusses, der von der Sonne (S) ausgeht, in Bezug auf die oder auf jede ausrichtbare Fläche (21, 22),
- Ermitteln (140) einer Sollwert-Fluglage,
- Ermitteln (150) von einer folgenden Ausrichtung von der oder von jeder ausrichtbaren Fläche (21, 22), wobei das Sonnendrehmoment, welches mittels der Wechselwirkung des Lichtflusses mit der oder den ausrichtbaren Flächen (21, 22) hervorgerufen wird, es erlaubt, die Sollwert-Fluglage zu erreichen,
- Erzeugen (160) eines Steuerbefehls, welcher für das Motorisierungsmodul (14) bestimmt ist, um die oder jede ausrichtbare Fläche (21, 22) zu veranlassen, sich in die folgende Orientierung zu begeben,
wobei jede folgende Ausrichtung von der oder von jeder ausrichtbaren Fläche (21, 22) ermittelt wird in Abhängigkeit von der aktuellen Ausrichtung von der oder von jeder ausrichtbaren Fläche (21, 22), von der Richtung des Lichtflusses, der von der Sonne (S) ausgeht, von den gemessenen Winkelgeschwindigkeiten (*ω_{X},ω_{Y},ω_{Z}*) und von dem akkumulierten Drehimpuls (H_{RW}).

2. Verfahren (100) gemäß Anspruch 1, wobei die ermittelte Sollwert-Fluglage derart ist, dass das Weltraumgerät (10) in einer Dynamisches-Gleichgewicht-Position relativ zur Gesamtheit von äußeren Kräften, die an das Weltraumgerät (10) angelegt sind, ist.

3. Verfahren gemäß irgendeinem der vorherigen Ansprüche, wobei jede Änderung der Ausrichtung von der oder von jeder ausrichtbaren Fläche (21, 22) zu einer Drehung von der oder von jeder ausrichtbaren Fläche (21, 22) um zumindest die Generatorachse (Yₛₐₜ) korrespondiert.

4. Verfahren gemäß irgendeinem der vorherigen Ansprüche, wobei das Weltraumgerät (10) mindestens zwei ausrichtbare Flächen (21, 22) aufweist, welche im Wesentlichen entlang der Generatorachse (Yₛₐₜ) auf eine symmetrische Weise bezüglich einer anderen lokalen Achse (Zₛₐₜ) angeordnet sind.

5. Verfahren gemäß irgendeinem der vorherigen Ansprüche, wobei mindestens eine ausrichtbare Fläche (21, 22) ein Solarpaneel (21, 22) ist, welches eine Beleuchtungsfläche (23, 24) aufweist.

6. Verfahren (100) gemäß Anspruch 5, wobei die ermittelte Sollwert-Fluglage und der Steuerbefehl derart sind, dass der Winkel zwischen der Normalen zur Beleuchtungsfläche (23, 24) von dem oder von jedem Solarpaneel (21, 22) und der Richtung des Lichtflusses, der von der Sonne (S) ausgeht, kleiner als 90 Grad ist.

7. Verfahren (100) gemäß irgendeinem der vorherigen Ansprüche, wobei das System zum Akkumulieren von Drehimpuls (20) mindestens ein Reaktionsrad aufweist.

8. Verfahren (100) gemäß Anspruch 7, wobei der Schritt des Beibehaltens (110) des Drehimpulses (H_{RW}) zum Beibehalten einer konstanten Drehzahl von dem oder von jedem Reaktionsrad korrespondiert.

9. Verfahren (100) gemäß irgendeinem der vorherigen Ansprüche, welcher ferner einen Schritt aufweist, der besteht aus dem Steuern des Drehimpulses (H_{RW}), sodass der akkumulierte Drehimpuls (H_{RW}), der im Wesentlichen entlang der Generatorachse (Yₛₐₜ) orientiert ist, beibehalten wird.

10. Verfahren (100) gemäß irgendeinem der vorherigen Ansprüche, wobei das Weltraumgerät (10) ein Satellit oder eine interplanetare Sonde ist.

11. Verfahren (100) gemäß irgendeinem der vorherigen Ansprüche, wobei die oder jede ausrichtbare Fläche (21, 22) angeordnet ist, sodass die Generatorachse (Yₛₐₜ) im Abstand zu dem Massenmittelpunkt des Weltraumgeräts (10) ist.

12. Computerprogrammprodukt, welches Software-Informationen aufweist, welche, wenn sie mittels einer Computerausrüstung durchgeführt werden, das Verfahren (100) gemäß irgendeinem der vorherigen Ansprüche durchführen.

13. Modul zur Steuerung der Fluglage (18) eines Weltraumgeräts (10), wobei das Weltraumgerät (10) ein lokales Koordinatensystem definiert, welches aus drei lokalen Achsen (Xₛₐₜ, Yₛₐₜ, Zₛₐₜ) zusammengesetzt ist, und aufweist mindestens eine ausrichtbare Fläche (21, 22), welche sich entlang einer der lokalen Achsen (Yₛₐₜ), genannt Generatorachse, erstreckt, ein Motorisierungsmodul (14), welches imstande ist, um Steuerbefehle zu empfangen und um eine Ausrichtung von der oder von jeder ausrichtbaren Fläche (21, 22) in dem lokalen Koordinatensystem (Xₛₐₜ, Yₛₐₜ, Zₛₐₜ) abhängig von den empfangenen Steuerbefehlen zu modifizieren, ein Messmodul (16), welches imstande ist, um mindestens bestimmte physikalische Parameter zu messen, welche relativ zu dem Weltraumgerät (10) sind, und ein System zum Akkumulieren von Drehimpuls (20),
wobei das Modul zur Steuerung der Fluglage (18) imstande ist, um:
- den Drehimpuls (H_{RW}), der mittels des Systems zum Akkumulieren von Drehimpuls (20) akkumuliert wird, beizubehalten,
- die Winkelgeschwindigkeiten (*ω_{X},ω_{Y},ω_{Z}*) der Drehung des Weltraumgeräts (10) um die drei lokalen Achsen (Xₛₐₜ, Yₛₐₜ, Zₛₐₜ) des lokalen Koordinatensystems zu berechnen,
- die Richtung des Lichtflusses, der von der Sonne (S) ausgeht, in Bezug auf die oder auf jede ausrichtbare Fläche (21, 22) zu berechnen,
- eine Sollwert-Fluglage zu ermitteln,
- eine folgende Ausrichtung von der oder von jeder ausrichtbaren Fläche (21, 22) zu berechnen, wobei das Sonnendrehmoment, welches mittels der Wechselwirkung des Lichtflusses mit der oder den ausrichtbaren Flächen (21, 22) hervorgerufen wird, es erlaubt, die Sollwert-Fluglage zu erreichen,
- einen Steuerbefehl zu erzeugen, welcher für das Motorisierungsmodul (14) bestimmt ist, um die oder jede ausrichtbare Fläche (21, 22) zu veranlassen, sich in die folgende Orientierung zu begeben,
wobei jede folgende Ausrichtung von der oder von jeder ausrichtbaren Fläche (21, 22) ermittelt wird in Abhängigkeit von der aktuellen Ausrichtung von der oder von jeder ausrichtbaren Fläche (21, 22), von der Richtung des Lichtflusses, welcher von der Sonne (S) ausgeht, von den gemessenen Winkelgeschwindigkeiten (*ω_{X},ω_{Y},ω_{Z}*) und von dem akkumulierten Drehimpuls (H_{RW}).

## Claims

1. Method (100) of attitude control of a spacecraft (10), the spacecraft (10) defining a local frame composed of three local axes (Xₛₐₜ, Yₛₐₜ, Zₛₐₜ) and comprising at least one orientable surface (21, 22) extending along one of the local axes (Yₛₐₜ), termed the generator axis, a motorization module (14) able to receive piloting commands and to modify the orientation of the or of each orientable surface (21, 22) in the local frame (Xₛₐₜ, Yₛₐₜ, Zₛₐₜ) as a function of the piloting commands received, a measurement module (16) able to measure at least some physical parameters relating to the spacecraft (10), and an angular momentum accumulation system (20);
the method (100) comprising the following steps, implemented for each current orientation of the or of each orientable surface (21, 22):
- maintain (110) the angular momentum (H_{RW}) accumulated before the implementation of the method (100) by the angular momentum accumulation system (20);
- estimate (120) the angular speeds (ω_{X}, ω_{Y}, ω_{Z)} of rotation of the spacecraft (10) about the three local axes (Xₛₐₜ, Yₛₐₜ, Zₛₐₜ) of the local frame;
- estimate (130) the direction of the luminous flux arising from the Sun (S) with respect to the or to each orientable surface (21, 22);
- determine (140) a setpoint attitude;
- determine (150) a following orientation of the or of each orientable surface (21, 22) in which the solar couple engendered by the interaction of the luminous flux with the orientable surface or surfaces (21, 22), makes it possible to attain the setpoint attitude;
- generate (160) a piloting command intended for the motorization module (14) to make the or each orientable surface (21, 22) pass into the following orientation;
in which each following orientation of the or of each orientable surface (21, 22) is determined as a function of the current orientation of the or of each orientable surface (21, 22), of the direction of the luminous flux arising from the Sun (S), of the angular speeds (ω_{X}, ω_{Y}, ω_{Z)} measured and of the angular momentum (H_{RW}) accumulated.

2. Method (100) according to Claim 1, in which the setpoint attitude determined is such that the spacecraft (10) is in a dynamic equilibrium position in relation to the set of exterior forces applied to the spacecraft (10).

3. Method according to any one of the preceding claims, in which each change of the orientation of the or of each orientable surface (21, 22) corresponds to a rotation of the or of each orientable surface (21, 22) about at least the generator axis (Yₛₐₜ).

4. Method according to any one of the preceding claims, in which the spacecraft (10) comprises at least two orientable surfaces (21, 22) disposed substantially along the generator axis (Yₛₐₜ) in a symmetric manner with respect to another local axis (Zₛₐₜ).

5. Method according to any one of the preceding claims, in which at least one orientable surface (21, 22) is a solar panel (21, 22) comprising a lighting face (23, 24).

6. Method (100) according to Claim 5, in which the setpoint attitude determined and the piloting command are such that the angle between the normal to the lighting face (23, 24) of the or of each solar panel (21, 22) and the direction of the luminous flux arising from the Sun (S) is less than 90 degrees.

7. Method (100) according to any one of the preceding claims, in which the angular momentum accumulation system (20) comprises at least one reaction wheel.

8. Method (100) according to Claim 7, in which the step (110) of maintaining the angular momentum (H_{RW}) corresponds to the maintaining of a constant rotation speed of the or of each reaction wheel.

9. Method (100) according to any one of the preceding claims, furthermore comprising a step consisting in controlling the angular momentum (H_{RW}) so as to keep the angular momentum (H_{RW}) accumulated principally oriented along the generator axis (Yₛₐₜ).

10. Method (100) according to any one of the preceding claims, in which the spacecraft (10) is a satellite or an interplanetary probe.

11. Method (100) according to any one of the preceding claims, in which the or each orientable surface (21, 22) is disposed so that the generator axis (Yₛₐₜ) is away from the centre of mass of the spacecraft (10) .

12. Computer program product comprising software instructions which, when implemented by computer equipment, implements the method (100) according to any one of the preceding claims.

13. Module for attitude control (18) of a spacecraft (10), the spacecraft (10) defining a local frame composed of three local axes (Xₛₐₜ, Yₛₐₜ, Zₛₐₜ) and comprising at least one orientable surface (21, 22) extending along one of the local axes (Yₛₐₜ), termed the generator axis, a motorization module (14) able to receive piloting commands and to modify the orientation of the or of each orientable surface (21, 22) in the local frame (Xₛₐₜ, Yₛₐₜ, Zₛₐₜ) as a function of the piloting commands received, a measurement module (16) able to measure at least some physical parameters relating to the spacecraft (10), and an angular momentum accumulation system (20);
the attitude control module (18) being able to:
- maintain the angular momentum (H_{RW}) accumulated by the angular momentum accumulation system (20);
- estimate the angular speeds (ω_{X}, ω_{Y}, ω_{Z}) of rotation of the spacecraft (10) about the three local axes (Xₛₐₜ, Yₛₐₜ, Zₛₐₜ) of the local frame;
- estimate the direction of the luminous flux arising from the Sun (S) with respect to the or to each orientable surface (21, 22);
- determine a setpoint attitude;
- determine a following orientation of the or of each orientable surface (21, 22) in which the solar couple engendered by the interaction of the luminous flux with the orientable surface or surfaces (21, 22), makes it possible to attain the setpoint attitude;
- generate a piloting command intended for the motorization module (14) to make the or each orientable surface (21, 22) pass into the following orientation;
each following orientation of the or of each orientable surface (21, 22) being determined as a function of the current orientation of the or of each orientable surface (21, 22), of the direction of the luminous flux arising from the Sun (S), of the angular speeds (ω_{X}, ω_{Y}, ω_{Z}) measured and of the angular momentum (H_{RW}) accumulated.
